# EUROPEAN PATENT SPECIFICATION

(11) **EP 0 420 901 B1**
(45) Date of publication and mention of the grant of the patent: **31.08.1994**
(21) Application number: 89907167.4
(22) Date of filing: 15.06.1989
(51) Int. Cl.: H05B 37/02, H02J 13/00

(54) **PROCEDURE AND APPARATUS FOR THE CONTROL OF ELECTRIC POWER**
VERFAHREN UND VORRICHTUNG ZUR REGELUNG DER ELEKTRISCHEN LEISTUNG
PROCEDE ET APPAREIL DE COMMANDE D'UN COURANT ELECTRIQUE

(30) Priority: 23.06.1988 FI 883024
(43) Date of publication of application: 10.04.1991
(73) Proprietor: SMART SET OY, SF-02150 Espoo (FI)
(72) Inventor: SALO, Olli, SF-00150 Helsinki (FI)
(74) Representative: Füchsle, Klaus, Dipl.-Ing.
(86) International application number: FI8900117
(87) International publication number: WO8912950

(56) References cited:
- EP-A- 0 247 874
- GB-A- 2 115 994
- US-A- 3 931 514
- US-A- 4 249 794
- US-A- 4 339 670
- US-A- 4 649 323

## Description

The present invention relates to a procedure and an apparatus for the control of electric power, by which procedure the electric power supplied to a load is regulated by means of a regulator, e.g. a thyristor regulator.

Stepless variation of the brightness of illumination using modern thyristor techniques is based on so-called phase angle control. This means that during each half-cycle of the mains voltage, a thyristor is triggered into conduction upon the lapse of a desired delay (i.e. phase angle) after the beginning of the half-cycle. The longer the delay before triggering, the shorter the time during which power is supplied to the load, i.e. the dimmer the light produced by the lamp.

A feature of the so-called intelligent design in buildings is the possibility of individual control of each illuminator in a room. Using conventional techniques, this requires e.g. a separate control knob beside a door for each lighting fixture. If the brightness of a given illuminator is to be controlled from several locations, this necessitates the use of a microprocessor-based control unit which gathers the control data from the control knobs in different locations and controls the thyristor regulator of each illuminator in a centralized manner. If the thyristor regulators are incorporated in the control unit, then the large number of outgoing conductors becomes a problem. The conductors carry an intermittent mains current which causes radio interference, and they have to be connected to a socket specifically reserved for a given illuminator. For example a vacuum cleaner must not be plugged into such a socket, because the regulator cannot reasonably be rated for the power levels involved.

Another solution for transmitting the control data to the device to be controlled involves the use of a network, either a separate galvanic data net or an electrical network, which connects all the devices to be controlled. The control commands are fed by the controlling device into this network and received by each device. Each device checks by the device address sent along with each command whether the command concerns the particular device. Such a system necessitates the use of microprocessor-based logic circuitry in each device. Although microelectronics develops fast, it does not seem likely that this kind of logic circuitry should become cheap enough in the near future to be usable in individual lamps. Moreover, there is a limit to the transmission capacity of the network in such systems, and this may impose a restriction regarding the variety of control commands that can be handled.

The object of the present invention is to eliminate the drawbacks referred to above.

This object is solved in accordance with the present invention by a procedure having the features of claim 1 and by an apparatus having the features of claim 4.

Preferred embodiments of the invention are included in the dependent claims.

The procedure of the invention is mainly characterized in that the regulator control signals, e.g. thyristor firing pulses, are produced by a separate control unit and passed in the form of optical signals via at least one optical fibre to a socket or equivalent and further to a photosensitive device, which converts the signals into electrical form and applies them to at least one controllable solid-state component, e.g. thyristor, in the power stage of the regulator.

The apparatus implementing the procedure of the invention for the control of electric power, comprising a regulator, e.g. a thyristor regulator, for varying the power supplied to the load, and a socket or a similar connector and a plug or equivalent, is mainly characterized in that the apparatus has a separate control unit producing the regulator control signals, e.g. thyristor firing pulses, at least one optical fibre carrying the control signals in optical form, and, located in the regulator, a photosensitive component to which the optical signals are transmitted via the socket or equivalent and which converts the signals into electrical form and applies them to at least one controllable solid-state component, e.g. thyristor, in the power stage of the regulator.

Compared to previously known systems, this invention is simple and functions with the least imagingable number of electronic components in the device to be controlled. Yet it allows e.g. individual control of each illuminator, including selectable dimming rates.

An essential feature of the system is that all the sockets involved are fed by the normal mains supply, and that the regulator is placed in the illuminator or other load, e.g. in its connecting plug.

In the following, the invention is described in greater detail by the aid of an example, reference being made to the attached drawings, in which

Fig. 1 presents a control unit, optical-fibre cables and a wall socket.

Fig. 2 presents a plug.

Fig. 3 shows a diagram of the plug circuit.

Fig. 4 presents a plug and an adapter.

Fig. 5 shows the adapter in rear view.

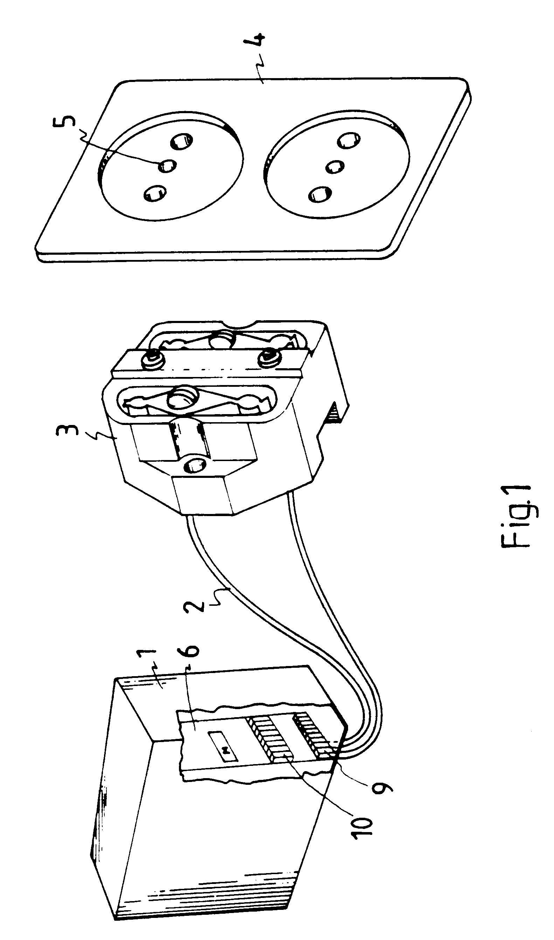

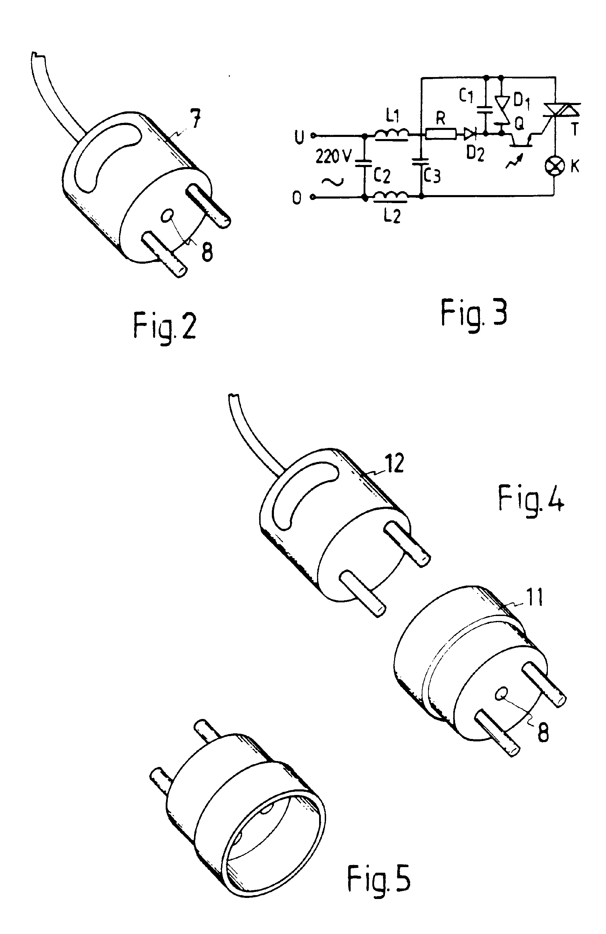

Figure 1 shows a control unit 1, two optical-fibre cables 2, each having an optical fibre inside, and a wall socket consisting of a connector part 3 and a cover 4. The cover is provided with holes 5 located in the area covered by a plug, each hole accommodating one end of an optical-fibre cable. The control unit contains a microprocessor-based controller 6 which generates trigger pulses syncronized with the phase voltage of the mains supply. These pulses are passed via the optical fibre in an optical-fibre cable to the cover of the wall socket, from where they are fed into the current regulator, which is a thyristor or triac regulator built inside the connecting plug of each illuminator. The plug 7 in fig. 2, which is inserted into the socket, has a hole 8 so located that it comes opposite to the hole 5 in the socket cover. In the hole 8 is a photo-transistor Q, which is connected to the regulator circuit as shown by the diagram in fig. 3. The transistor converts the optical pulses back into electrical pulses, which trigger a triac T in the power stage of the regulator, e.g. a triac regulator.

In addition, the regulator circuit comprises a Zener diode D1, a capacitor C1 and a series circuit of a resistor R and a diode D2, which are all connected between the mains phase U and the collector of the transistor, and an interference suppression circuit consisting of inductance L1 in the mains phase U, inductance L2 in the neutral mains line 0 and capacitors C2 and C3 connected between the two mains lines.

The layout of the components belonging to the electrical connection of dome lamps can be such that only the photo-transistor and a few other small components are placed in the socket while the rest are placed on the plate between the ceiling and the hood of the lamp anchorage.

The control unit may be a lighting control card as shown in fig. 1. The unit has eight fibre-optic connectors 9 at its bottom edge for the fibres leading to the socket covers. In this case the unit can thus control eight illuminators. For each illuminator, the control unit has a separate phase angle counter 10, whose set value is altered by the unit's microprocessor M when the user alters the illumination brightness setting.

The plug accommodating the regulator can also be implemented as an adapter 11 connected between the socket and the plug 12 of the load as shown in fig. 4. Fig. 5 shows the adapter in rear view.

It is obvious to a person skilled in the art that different embodiments of the invention are not restricted to the examples described above, but that they may instead be varied within the scope of the following claims. Besides an illuminator, the load may also be some other type of device, e.g. an electric heater, in which case the regulator preferably employs zero-point switching.

## Claims

1. Procedure for the control of electric power, by which procedure the electric power supplied to a load is controlled by means of a regulator, e.g. a thyristor regulator, and by which procedure the regulator control signals, e.g. thyristor firing pulses, are produced by a separate control unit (6), **characterized** in that the regulator control signals are passed from the separate control unit in the form of optical signals via at least one optical fibre (2) to a socket (3, 4), from where the signals are directed to a photosensitive device (Q) placed in a corresponding location in a plug (7, 11, 12) adapted to the socket (3, 4) so that the photosensitive device (Q) is exposed to the optical control signals from the optical fibre (2) and applies them to at least one controllable solid-state component, e.g. thyristor, in the power stage of the regulator, said plug being electrically supplied by the socket.

2. Procedure according to claim 1,
**characterized** in that the control unit is based on phase angle control.

3. Procedure according to claim 1 or 2,
**characterized** in that the control unit employs zero-point switching.

4. Apparatus implementing the procedure of claim 1 for the control of electric power, comprising a regulator, e.g. a thyristor regulator, for varying the power supplied to the load, a socket connector (3, 4) and a plug (7, 11, 12) adapted to the socket (3, 4), and a separate control unit (6) producing the regulator control signals, e.g. thyristor firing pulses,
**characterized** in that the apparatus has at least one optical fibre (2) carrying the control signals in optical form, and, located in the regulator in the plug (7, 11, 12), a photosensitive device (Q) to which the optical signals are transmitted via the socket (3, 4) and which applies them to at least one controllable solid-state component, e.g. thyristor, in the power stage of the regulator.

5. Apparatus according to claim 4,
**characterized** in that the control unit (6) producing the control signals for one or more regulators is based on the use of a microprocessor.

6. Apparatus according to claim 4,
**characterized** in that the control unit (6) producing the control signals for one or more regulators is based on the use of analog electronics.

7. Apparatus according to claim 4, 5 or 6,
**characterized** in that at least the socket or similar connecting box is provided with a hole (5), and that the control signals are directed via the hole in the socket or similar connecting box to a photosensitive device (q) placed in the plug (7, 11, 12).

8. Apparatus according to any one of the claims 4-7,
**characterized** in that at least the controllable solid-state component(s) (T) and the photosensitive device (Q) are placed in the plug (7, 11, 12).

9. Apparatus according to any one of the claims 4-7,
**characterized** in that the photosensitive device (Q) is placed in a plug (7, 11, 12) while the controllable solid-state component(s) are located outside the plug (7, 11, 12).

10. Apparatus according to any one of the claims 4-9,
**characterized** in that the plug is an intermediate-socket (11) which controls the power supplied to the load and is connected between the plug (12) or equivalent of the load and a socket or an equivalent connecting box.

## Patentansprüche

1. Verfahren zum Steuern von elektrischer Leistung, durch welches Verfahren die elektrische Leistung, die einer Last zugeführt wird, mittels eines Stellers z.B. ein Thyristor-Steller gesteuert wird und durch welches Verfahren die Steller-Steuersignale, z.B. Thyristor-Zündimpulse, durch eine separate Steuereinheit erzeugt werden, dadurch gekennzeichnet, daß die Steller-Steuersignale in Form von optischen Signalen von der separaten Steuereinheit über mindestens eine Lichtleitfaser (2) an eine Steckdose (3, 4) übermittelt werden, von wo die Signale an eine lichtempfindliche Einrichtung (Q) geleitet werden, die an einer übereinstimmenden Stelle in einem an der Steckdose (3, 4) angepaßten Stecker (7, 11, 12) angeordnet ist, so daß die lichtempfindliche Einrichtung (Q) den optischen Steuersignalen von der Lichtleitfaser (2) ausgesetzt ist und sie an mindestens eine steuerbare Halbleitereinheit, z.B. ein Thyristor, in der Leistungsstufe des Stellers übergibt, wobei der Stecker von der Steckdose elektrisch versorgt wird.

2. Verfahren nach Anspruch 1, dadurch gekennzeichnet, daß die Steuereinheit auf einer Phasenwinkel-Steuerung basiert.

3. Verfahren nach Anspruch 1 oder 2, dadurch gekennzeichnet, daß die Steuereinheit Nullpunkt-Schalten verwendet.

4. Vorrichtung zum Durchführen des Verfahrens nach Anspruch 1 zum Steuern von elektrischer Leistung, mit einem Steller, z.B. ein Thyristor-Steller, zum Verändern der Leistung, die einer Last zugeführt wird, einer Steckdose (3, 4), einem an der Steckdose (3, 4) angepaßten Stecker (7, 11, 12) und einer getrennten Steuereinheit (6), die die Steller-Steuersignale, z.B. Thyristor Zündimpulse, erzeugt, dadurch gekennzeichnet, daß die Vorrichtung mindestens eine Lichtleitfaser (2), die die Steuersignale in optischer Form übermittelt, und eine sich im Steller im Stecker (7, 11, 12) befindliche, lichtempfindliche Einrichtung (Q) aufweist, an die die optischen Signale über die Steckdose (3, 4) übermittelt werden und sie an mindestens eine steuerbare Halbleiter-Einheit, z.B. ein Thyristor, in der Leistungsstufe des Stellers übergibt.

5. Vorrichtung nach Anspruch 4, dadurch gekennzeichnet, daß die Steuereinheit (6), die die Steuersignale für einen oder mehrere Steller erzeugt, auf der Verwendung von Mikroprozessoren basiert.

6. Vorrichtung nach Anspruch 4, dadurch gekennzeichnet, daß die Steuereinheit (6), die die Steuersignale für einen oder mehrere Steller erzeugt, auf der Verwendung von analoger Elektronik basiert.

7. Vorrichtung nach Anspruch 4, 5 oder 6, dadurch gekennzeichnet, daß mindestens die Steckdose oder eine ähnliche Verbindungseinheit mit einem Loch (5) versehen ist, und daß die Steuersignale durch dieses Loch über die Steckdose oder ähnliche Verbindungseinheit an eine lichtempfindliche Einrichtung (Q) geleitet werden, die in dem Stecker (7, 11, 12) untergebracht ist.

8. Vorrichtung nach einem der Ansprüche 4 bis 7, dadurch gekennzeichnet, daß zumindest die steuerbare(n) Halbleiterkomponente(n) (T) und die lichtempfindliche Einrichtung (Q) in dem Stecker (7, 11, 12) untergebracht sind.

9. Vorrichtung nach einem der Ansprüche 4 bis 7, dadurch gekennzeichnet, daß die lichtempfindliche Einrichtung (Q) in einem Stecker (7, 11, 12) untergebracht ist, während die steuerbare(n) Halbleitereinheit(en) sich außerhalb des Steckers (7, 11, 12) befinden.

10. Vorrichtung nach einem der Ansprüche 4 bis 9, dadurch gekennzeichnet, daß der Stecker eine Mignonfassung (11) ist, die die zur Last zugeführte Leistung steuert und zwischen dem Stecker (12) oder einem Äquivalent der Last und einer Steckdose oder einer ähnlichen Verbindungseinheit verbunden ist.

## Revendications

1. Procédé pour la commande de la puissance électrique, par lequel procédé la puissance électrique délivrée à une charge est commandée au moyen d'un régulateur, par exemple un régulateur à thyristor et par lequel procédé, les signaux de commande de régulateur, par exemple des impulsions d'amorçage du thyristor, sont produits par une unité de commande séparée (6), caractérisé en ce que les signaux de commande des régulateurs sont passés à partir d'une unité de commande séparée sous la forme de signaux optiques par au moins une fibre optique (2) à une prise femelle (3, 4), à partir de laquelle les signaux sont dirigés vers un dispositif photosensible (Q) placé dans un emplacement correspondant dans une prise mâle (7, 11, 12) adaptée à la prise femelle (3, 4) de sorte que le dispositif photosensible (Q) soit exposé aux signaux de commande optiques provenant de la fibre optique (2) et les applique à au moins un composant à semi-conducteur contrôlable, par exemple un thyristor, dans l'étage de puissance du régulateur, ladite prise mâle étant électriquement alimentée par la prise femelle.

2. Procédé selon la revendication 1, caractérisé en ce que l'unité de commande est basée sur la commande de l'angle de phase.

3. Procédé selon la revendication 1 ou 2, caractérisé en ce que l'unité de commande fait usage de la commutation au point zéro.

4. Dispositif mettant en oeuvre le procédé de la revendication 1 pour la commande de la puissance électrique, comprenant un régulateur, par exemple un régulateur à thyristor, pour faire varier la puissance délivrée à la charge, un connecteur de prise femelle (3, 4) et une prise mâle (7, 11, 12) adaptée à la prise femelle (3, 4) et une unité de commande séparée (6) produisant les signaux de commande de régulateur, par exemple des impulsions d'amorçage de thyristor, caractérisé en ce que le dispositif comporte au moins une fibre optique (2) véhiculant les signaux de commande sous forme optique et placée dans le régulateur dans la prise mâle (7, 11, 12), un dispositif photosensible (Q) auquel les signaux optiques sont transmis par l'intermédiaire de la prise femelle (3, 4) et qui les applique à au moins un composant à semi-conducteur contrôlable, par exemple un thyristor, dans l'étage de puissance du régulateur.

5. Dispositif selon la revendication 4, caractérisé en ce que l'unité de commande (6) produisant les signaux de commande pour un ou plusieurs régulateurs, est basée sur l'utilisation d'un microprocesseur.

6. Dispositif selon la revendication 4, caractérisé en ce que l'unité commande (6) produisant les signaux de commande pour un ou plusieurs régulateurs, est basée sur l'utilisation de circuits électroniques analogiques.

7. Dispositif selon la revendication 4, 5 ou 6 caractérisé en ce qu'au moins la prise femelle ou le boîtier de connexion similaire est prévu avec un trou (5), en ce que les signaux de commande sont dirigés par l'intermédiaire de trous dans la prise femelle ou d'un boîtier de connexion similaire à un dispositif photosensible (Q) placé dans la prise mâle (7, 11, 12).

8. Dispositif selon l'une quelconque des revendications 4 à 7, caractérisé en ce qu'au moins le composant ou les composants à semi-conducteur contrôlables (T) et le dispositif photosensible (Q) sont placés dans la prise mâle (7, 11, 12).

9. Dispositif selon l'une quelconque des revendications 4 à 7, caractérisé en ce que le dispositif photosensible (Q) est placé dans une prise mâle (7, 11, 12), tandis que le composant ou les composants à semi-conducteur contrôlables sont placés à l'extérieur de la prise mâle (7, 11, 12).

10. Dispositif selon l'une quelconque des revendications 4 à 9, caractérisé en ce que la prise mâle est une prise intermédiaire (11) qui commande la puissance délivrée à la charge et est connectée entre la prise mâle (12) ou équivalent de la charge et une prise femelle ou un boîtier de connexion équivalent.
